# EUROPÄISCHE PATENTSCHRIFT

(11) **EP 2 408 588 B1**
(45) Veröffentlichungstag und Bekanntmachung des Hinweises auf die Patenterteilung: **16.01.2013**
(21) Anmeldenummer: 09779155.2
(22) Anmeldetag: 16.03.2009
(51) Int. Cl.: B23P 15/00, F16C 9/04, B23P 19/06

(54) **VERFAHREN ZUM FÜGEN ZWEIER KOMPONENTEN EINES BAUTEILS**
METHOD FOR JOINING TWO COMPONENTS OF A UNIT
PROCÉDÉ D'ASSEMBLAGE DE DEUX COMPOSANTS D'UNE PIÈCE

(43) Veröffentlichungstag der Anmeldung: 25.01.2012
(73) Patentinhaber: Alfing Kessler Sondermaschinen GmbH, 73433 Aalen (DE)
(72) Erfinder: WISNIEWSKI, Horst, 73433 Aalen (DE)
(74) Vertreter: HOFFMANN EITLE
(86) Internationale Anmeldenummer: PCT/EP2009/053063
(87) Internationale Veröffentlichungsnummer: WO 2010/105660

(56) Entgegenhaltungen:
- DE-T5-112006 002 937
- JP-A- 2003 311 553
- JP-A- 2007 154 942
- JP-A- 2007 260 905
- US-A1- 2005 172 484

## Beschreibung

### Technisches Gebiet

Die vorliegende Anmeldung betrifft ein Verfahren zum Fügen zweier miteinander zu verschraubender Komponenten eines Bauteils, insbesondere eines bruchgetrennten Bauteils, insbesondere eines Bruchpleuels oder einer bruchgetrennten Kreuzgelenkgabel, sowie ein Fügesystem zur Durchführung des Verfahrens.

### Hintergrund der Erfindung

Beim Fügen von miteinander zu verschraubenden Komponenten von Bauteilen ist es häufig notwendig, Setzvorgänge innerhalb der Fügefläche dadurch zu unterstützen, dass die beiden Komponenten des zu fügenden Bauteils an der Fügefläche unter einer bestimmten Flächenpressung miteinander in Kontakt gebracht werden.

Im Bereich der bruchgetrennten Bauteile, insbesondere im Bereich von bruchgetrennten Pleueln und bruchgetrennten Kreuzgelenkgabeln, werden diese Setzvorgänge typischerweise dadurch ausgelöst, dass das bruchgetrennte Bauteil einmal mit den dafür vorgesehenen Schrauben verschraubt wird, die Schrauben danach wieder gelöst werden und die beiden Komponenten des Bauteils auseinander gefahren werden um Fremdkörper wie beispielsweise Partikel oder andere Verunreinigungen, welche durch den Setzvorgang gelöst wurden, zu entfernen. Dann werden die beiden Komponenten zum zweiten Mal mit den Schrauben zusammengeschraubt, so dass das bruchgetrennte Bauteil an seine endgültige Montageposition verbracht werden kann.

Nach dem Öffnen der beiden Komponenten des bruchgetrennten Bauteils wird die Fügefläche, insbesondere die Trennfläche, mittels Rütteln, Bürsten, Abblasen, einer Fluidbehandlung oder anderen mechanischen Vorgängen von den gelösten Fremdkörpern, insbesondere Partikeln, Einschlüssen oder anderen Verunreinigungen gesäubert. Dies hat unter anderem auch den Effekt, dass beim erneuten Öffnen zum Montieren des bruchgetrennten Bauteils in seiner endgültigen Montageposition Partikel, welche sich auf der Trennfläche befinden, nicht in den jeweiligen Montageraum, beispielsweise den Motorinnenraum, eintreten können.

Die Setzvorgänge in der Fügefläche, bei bruchgetrennten Bauteilen insbesondere in der Trennfläche, finden bei jedem erneuten Verschrauben und entsprechend jedem erneuten Aufeinanderpressen der Trennflächen in der Trennfläche/Fügefläche statt. Die Setzvorgänge sind auch abhängig von der jeweiligen Fügekraft bzw. Flächenpressung mit welcher die Trennflächen aufeinander gepresst werden.

Die Schrauben, welche typischerweise bei Bruchpleueln dazu verwendet werden die beiden Komponenten wieder miteinander zu verbinden, also den Deckel wieder mit dem Schaft zu verbinden, können üblicherweise nur dreimal bis zur Fließgrenze verschraubt werden, danach sind sie unbrauchbar. Entsprechend werden durch das erstmalige Verschrauben des Deckels mit dem Schaft zum Auslösen der Setzvorgänge, das darauffolgende Öffnen und das wiederholte Verschrauben des Deckels mit dem Schaft bereits zwei Schraubvorgänge durchgeführt. Daher stellt der eigentliche Montagevorgang, beispielsweise das Montieren des Bruchpleuels an der Kurbelwelle eines Motors, den letztmöglichen Schraubvorgang für die verwendeten Schrauben des jeweiligen Bruchpleuels dar. Für weitere Schraubvorgänge müssten die Schrauben ausgetauscht werden.

Das Dokument DE 11 2006 002 937 T5 ist als nächstliegender Stand der Technik bekannt. Diese Schrift betrifft ein Verfahren zum Fügen zweier miteinander zu verschraubender komponenten eines Bauteils, welche komponenten der Deckel und der Schaft eines Bruchplevels oder der Deckel und das Unterteil einer Kreuzgelenk gabel sind, Umfassend die Schritte: - erstes Fügen der Komponenten mittels einer Fügevorrichtung in Form einer Fügepresse; - Trennen der komponenten; und - erneutes Fügen der komponenten durch verschrauben Allerdings offenbart diese Schrift nicht die Aufnahme einer Fügekraft/Weg-Kennlinie während des Fügens mit einer Fügevorrichtung, welche Kennlinie mit einer Referenzkennlinienschar verglichen wird und das Vorliegen eines Fremdkörpers an einer Trennfläche bei einer Abweichung der gemessenen Fügekraft/Weg-Kennlinie von der Referenzkennlinienschar angegeben wird.

Ferner sind als Stand der Technik die Dokumente US 2005/172484 A1, JP 2007 260905 A sowie JP 2003 311553 A bekannt.

### Beschreibung

Ausgehend von dem bekannten Verfahren ist es eine Aufgabe der vorliegenden Erfindung, ein effizienteres Verfahren sowie ein Fügesystem zum Fügen zweier miteinander zu verschraubender Komponenten eines Bauteils, welche komponenten der Deckel und oder Schaft eines Bruchplevels oder der Deckel und das Unterteil einer kreuzgelenk gabel sind , anzugeben, mit dem ermittelt werden kann, ob sich auf der Trennfläche Fremdkörper befinden

Ein solches Verfahren zum Fügen zweier miteinander zu verschraubender Komponenten eines Bauteils wird durch Anspruch 1 bereitgestellt. Vorteilhafte Varianten des Verfahrens sind den Unteransprüchen zu entnehmen.

Gemäß der vorliegenden Erfindung wird während des Fügens der Komponenten eine Fügekraft/Weg-Kennlinie aufgenommen, welche mit einer vorgegebenen Referenzkennlinienschar verglichen wird, um herauszufinden, ob sich an der Fügefläche/Trennfläche zwischen den beiden Komponenten Fremdkörper, insbesondere Partikel, Einschlüsse oder andere Verunreinigungen befinden. Weicht die Fügekraft/Weg-Kennlinie, welche während des ersten Fügevorgangs in der Fügevorrichtung gemessen wurde, von der Referenzkermlinienschar ab, so kann davon ausgegangen werden, dass ein Fremdkörper auf der Trennfläche vorhanden ist. Die Referenzkennlinienschar bildet dabei die Fügekraft/Weg- Kennlinie einer absolut sauberen Fügefläche/Trennfläche des gleichen Bauteiltyps ab.

Entsprechend muss beim Trennen der Komponenten eine sorgfältige Zwischenbehandlung durch Rütteln, Bürsten, Abblasen, Fluidbehandlung oder andere mechanische Maßnahmen erreicht werden, den Fremdkörper zu entfernen. Zur Überprüfung kann der Fügevorgang mit der Fügevorrichtung noch einmal überprüft werden, wiederum unter Aufnahme der Fügekraft/Weg-Kennlinie.

Vorteilhaft wird der Weg, also der Fügeweg, dabei relativ zu der Trennfläche gemessen, um hier einen festen Referenzpunkt zu haben.

Auf diese Weise kann mit der Fügevorrichtung, insbesondere der Fügepresse, zunächst ein Setzvorgang an der Fügefläche bzw. der Trennfläche der beiden Komponenten des Bauteils eingeleitet werden, wodurch das Setzen der jeweiligen Fügeflächen effizient erreicht werden kann. Insbesondere kann durch die Verwendung der Fügevorrichtung, insbesondere der Fügepresse, auch vermieden werden, dass die Schrauben, welche zur endgültigen Verschraubung der beiden Komponenten des Bauteils dienen, bereits im ersten Fügevorgang, welcher hauptsächlich zum Einleiten der Setzvorgänge in der Fügfläche dient, verwendet werden müssen. Entsprechend kann die Lebensdauer der Schrauben verlängert werden, da der erste Fügevorgang durch die Fügevorrichtung vorgenommen wird, und nicht durch Verschrauben.

Mit Vorteil werden die beiden Komponenten des Bauteils in der Fügevorrichtung, in Form einer Fügepresse, an der Fügefläche mit einer Fügekraft bzw. Flächenpressung aufeinandergepresst, welche höher ist als die Fügekraft bzw. Flächenpressung, welche durch einfaches Verschrauben erreicht werden könnte. Hierdurch können die Setzvorgänge in den Fügeflächen bzw. den Trennflächen der beiden Komponenten des Bauteils beschleunigt werden.

Vorteilhaft kann die Fügekraft während des ersten Fügens variiert werden und insbesondere einer vorgegebenen Kraftkennlinie folgen, welche das Setzen der jeweiligen Fügeflächen bzw. Trennflächen unterstützt.

Insbesondere ist es auch denkbar, dass die beiden Komponenten gegeneinander gerüttelt werden, um auf diese Weise auch ein Lösen von eventuell zwischen den beiden Fügeflächen vorhandenen Fremdkörpern, insbesondere Partikeln, Einschlüssen oder anderen Verunreinigungen zu unterstützen. Beim Trennen der beiden Komponenten können diese dann gelösten Fremdkörper, insbesondere die Partikel, Einschlüsse oder anderen Verunreinigungen von den Fügeflächen/Trennflächen entfernt werden, beispielsweise durch Rütteln, Bürsten, Abblasen, einer Fluidbehandlung oder andere mechanische Möglichkeiten zur Entfernung der jeweiligen Fremdkörper.

Erfindungsgemäß dient das Verfahren zum Fügen zweier zu verschraubender Komponenten eines Bruchpleuels, nämlich des Deckels und des Schafts des Bruchpleuels, oder zweier Komponenten einer Bruchkreuzgelenkgabel, nämlich eines Deckels und eines Unterteils der Kreuzgelenkgabel. Das Verfahren ist besonders gut und effizient anwendbar bei bruchgetrennten Bauteilen bei welchen ein Setzen der jeweiligen Trennflächen vor der eigentlichen Montage erwünscht und gefordert ist und bei welchen Partikel, Einschlüsse, Verunreinigungen und andere Fremdkörper, die beim Bruchtrennen an die jeweiligen Trennflächen gelangt sind oder an diesen verblieben sind, entfernt werden können, um bei einem späteren Öffnen und letztmaligen Schließen der bruchgetrennten Bauteile in der Montageposition keine Probleme der Verunreinigung der Montageumgebung zu erzielen.

Als Fügevorrichtung wird erfindungsgemäß eine Fügepresse, insbesondere eine Hydraulikpresse, eine Pneumatikpresse und/oder eine mit einem Linearantrieb oder Spindelantrieb versehene Presse verwendet, in welcher die beiden zu verschraubenden Komponenten des Bauteils aufgenommen werden können.

Als Fügevorrichtung in dem hier beschriebenen Verfahren gilt insbesondere nicht eine Vorrichtung, welche die beiden zu verschraubenden Komponenten des Bauteils an deren regulärer Schraubverbindung miteinander fügt. Die Fügevorrichtung gemäß dem Verfahren ist vielmehr eine von der eigentlichen Verschraubvorrichtung separate Vorrichtung, welche das Aufbringen der Fügekraft durch Mechanismen erreicht, welche nicht über die Verschraubung der beiden Komponenten wirken.

Gemäß dem Verfahren wird entsprechend erst später ein Fügen durch Verschrauben vorgenommen, nämlich erst nachdem die beiden Komponenten zunächst in der Fügevorrichtung gefügt wurden.

Erfindungsgemäß ist als Lösung der Aufgabe weiters ein Fügesystem gemäß Anspruch 7 zur Durchführung des Verfahrens angegeben, welches eine Fügevorrichtung, in Form einer Fügepresse, zum Aufbringen einer Fügekraft auf die Komponenten umfasst, weiterhin eine Vorrichtung zum Trennen der Komponenten und eine Vorrichtung zum Verschrauben der Komponenten. Die Fügevorrichtung, in Form einer Fügepresse, und die Vorrichtung zum Trennen der Komponenten können miteinander integriert sein, insbesondere kann hierfür ein Hydraulikzylinder, ein Pneumatikzylinder, ein Lineartrieb, ein Spindeltrieb oder irgendeine andere geeignete Vorrichtung gewählt werden die sowohl die Komponenten aufeinander zu als auch voneinander fort bewegen kann.

### Kurze Beschreibung der Zeichnungen

Im Folgenden werden anhand der beigefügten Zeichnungen exemplarisch Vorrichtungen zur Durchführung des Verfahrens beschrieben werden.

Dabei zeigt:
- Figur 1: schematisch eine Fügevorrichtung in Form einer Fügepresse zum Fügen zweier miteinander zu verschraubender Komponenten eines Bruchpleuels;
- Figur 2: schematisch eine Schraubvorrichtung zum Fügen der beiden Komponenten des Bruchpleuels mittels Verschrauben.

### Detaillierte Beschreibung der Ausführungsbeispiele

Im Folgenden wird eine Vorrichtung bzw. ein System zum Durchführen des Verfahrens zum Fügen zweier zu verschraubender Komponenten eines Bauteils beschrieben werden. Dabei bezeichnen gleiche Bezugszeichen gleiche bzw. ähnliche Elemente in den jeweiligen Figuren.

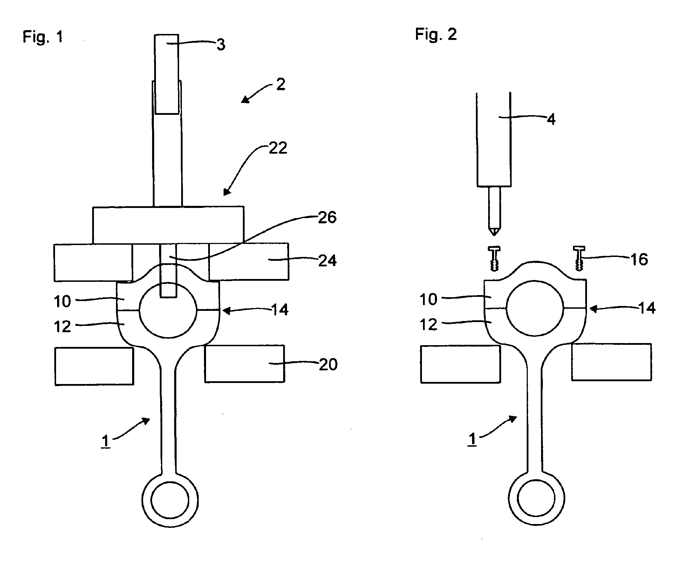

In den Figuren 1 und 2 ist jeweils ein Bauteil 1 in Form eines Bruchpleuels gezeigt. Der Bruchpleuel 1 umfasst einen Deckel 10 und einen Schaft 12 welche an der Trennfläche 14 durch Bruchtrennen voneinander getrennt sind. Durch Fügen des Deckels 10 mit dem Schaft 12 an der Trennfläche 14 kann der Bruchpleuel 1 wieder zusammengesetzt werden und in seine Funktionskonfiguration gebracht werden.

Der Deckel 10 und der Schaft 12 des Bruchpleuels 1 werden dabei typischerweise durch Verschrauben miteinander dauerhaft gefügt.

In Figur 1 ist der Schritt des Fügens der später miteinander zu verschraubenden Komponenten, nämlich des Deckels 10 und des Schafts 12 des Bauteils, mittels einer Fügevorrichtung 2 gezeigt.

Die Fügevorrichtung 2 umfasst eine Aufnahme 20, in welcher der Schaft 12 des Bruchpleuels 1 fest aufgenommen ist. Der Deckel 10 des Bruchpleuels 1 wird mittels einer Pressvorrichtung 22 auf den Schaft 12 aufgepresst. Dabei ist eine Aufnahme 24 vorgesehen, welche den Deckel 10 führt. Die Pressvorrichtung 22 kann dabei eine Fügekraft in Richtung des Schafts 12 des Bruchpleuels 1 ausüben und kann mittels eines Greifers 26 den Deckel 10 auch von dem Schaft 12 abheben. Auf diese Weise lassen sich die beiden Komponenten auch wieder voneinander trennen, um die jeweiligen Fügeflächen oder Trennflächen zu säubern.

Ein Hydraulikzylinder oder Pneumatikzylinder 3 bringt dabei die erforderliche Fügekraft auf die Pressvorrichtung 22 auf.

Das Aufbringen einer entsprechend hohen Fügekraft mittels des Hydraulikzylinders 3 über die Aufnahme 24 auf den Deckel 10, welcher auf den in der Aufnahme 20 gehaltenen Schaft 12 gepresst wird, also das Aufbringen einer Fügekraft auf die Trennfläche 14, führt dazu, dass Setzvorgänge in der Trennfläche 14 eingeleitet werden.

Da die Pressvorrichtung 22 unabhängig von den Verschraubungs - und Fließeigenschaften von Schrauben ist, kann auf die Trennfläche 14 eine Kraft ausgeübt werden, welche höher ist als die Kraft welche auf die Trennfläche 14 allein durch Verschrauben der beiden Komponenten 10, 12 miteinander ausgeübt werden könnte. Insbesondere ist es durch die Verwendung des Hydraulikzylinders 3 möglich, wesentlich höhere Fügekräfte bzw. Flächenpressungen auf die Trennfläche 14 aufzubringen als dies über die Verschraubung mittels konventioneller Schrauben möglich wäre.

Daher können die Schrauben, welche die beiden Komponenten 10, 12 des Bauteils 1 später miteinander verbinden sollen, für diesen ersten Fügevorgang, und insbesondere für das Einleiten der entsprechenden Setzvorgänge in der Trennfläche 14, geschont werden.

Die beiden Komponenten 10, 12 werden nach dem ersten Fügen wieder voneinander getrennt. In dem in Figur 1 gezeigten Beispiel durch Bewegen der Pressvorrichtung 22 entgegen der Richtung des Schafts 12, also um den Deckel 10 von dem Schaft 12 abzuheben.

Nach dem Öffnen können die beiden nun freigelegten Trennflächen 14 durch Rütteln der Komponenten aneinander, durch Ausblasen, Abbürsten, durch Fluidbehandlung oder durch andere mechanische Vorgänge von eventuell in diesem Bereich vorliegenden Partikeln, Verunreinigungen, Einschlüssen oder anderen Fremdkörpern gereinigt werden.

Durch den Setzvorgang und den Fügevorgang können beispielsweise Partikel, die beim Bruchtrennen aufgebogen wurden, die aber noch fest mit der Trennfläche verbunden sind, durch das entsprechende Zurückbiegen von der Trennfläche gelöst worden sein. Auf diese Weise können auch solche Partikel und Fremdkörper in der Trennfläche gelöst und dann entfernt werden.

In diesem Zusammenhang ist zu erwähnen, dass eine Möglichkeit besteht, die von der Pressvorrichtung 22 auf die Trennfläche 14 ausgeübte Fügekraft über den Fügeweg hinweg aufzunehmen, also eine Fügekraft/Weg-Kennline für den Fügevorgang aufzuzeichnen. Aus dieser Fügekraft/Weg-Kennlinie kann dann durch Vergleich mit einer Referenzkennlinienschar ermittelt werden, ob sich an der Trennfläche 14 Fremdkörper, insbesondere Partikel, Einschlüsse oder andere Verunreinigungen befinden.

Insbesondere verläuft die Fügekraft/Weg-Kennlinie bei Vorliegen eines solchen Partikels anders als bei einer vollständig sauberen Trennfläche. Die Fügekraft/Weg-Kennlinie ist bei Vorliegen eines Partikels insbesondere im unteren Bereich flacher, da der Partikel eine geringere Steifigkeit aufweist, als die gesamte Fügefläche. Entsprechend kann über diese Berechnung festgestellt werden, ob sich ein Fremdkörper an der Fügefläche 14 befindet. Sollte bei dieser Auswertung ein solcher Fremdkörper ermittelt werden, so kann im folgenden Vorgang des erneuten Trennens der Komponenten darauf geachtet werden, diesen Partikel zu entfernen. Um sicherzugehen, kann der Fügevorgang mittels der Fügepresse wiederholt werden.

Weiterhin ist es möglich, die mittels des Hydraulikzylinders 3 auf die Trennfläche 14 ausgeübte Fügekraft zu variieren. Insbesondere ist es möglich, die Fügekraft so zu variieren, dass die Setzvorgänge in der Trennfläche 14 ideal unterstützt werden. Hierzu ist beispielsweise denkbar, die Fügekraft sinusförmig, impulsförmig oder nach einem anderen spezifischen Schema auf die Trennfläche 14 aufzubringen.

Nach dem Trennen der Komponenten werden die Komponenten 10, 12 erneut gefügt. Hierbei werden die Komponenten 10, 12 mittels Verschrauben durch die dazu vorgesehenen Schrauben 16 miteinander gefügt, um dann an die jeweilige Montageposition gebracht zu werden, beispielsweise zum Einbau in einen Motor und zur Verbindung mit der entsprechenden Kurbelwelle.

Das Fügen der Komponenten 10, 12 in diesem Schritt geschieht entsprechend mittels Verschraubens mit den dafür vorgesehenen Schrauben 16, welche in das Bauteil 1 mittels eines Schraubers 4 eingetrieben werden. Die Schrauben 16 werden dabei nur so weit belastet wie es notwendig ist, um die beiden Komponenten 10, 12 (transport-)sicher miteinander zu fügen.

Es ist jedoch aufgrund des vorliegenden Verfahrens nicht mehr notwendig, über die Schrauben 16 eine so hohe Fügekraft auf die Trennfläche 14 aufzubringen, dass Setzvorgänge an der Trennfläche 14 ausgelöst werden, oder dass möglicherweise vorhandene Fremdkörper gelöst werden. Beim dem Fügen durch Verschrauben in dieser Arbeitsstation wird lediglich sichergestellt, dass die beiden Komponenten so miteinander gefügt sind, dass das Bauteil sicher zu der Montageposition transportiert werden kann, ohne dass es Schaden nimmt, oder ohne dass Teile verloren gehen.

## Patentansprüche

1. Verfahren zum Fügen zweier miteinander zu verschraubender Komponenten (10, 12) eines Bauteils (1), welche Komponenten der Deckel (10) und der Schaft (12) eines Bruchpleuels (1) oder der Deckel und das Unterteil einer Kreuzgelenkgabel sind, umfassend die Schritte:
- erstes Fügen der Komponenten mittels einer Fügevorrichtung (2) in Form einer Fügepresse (22);
- Trennen der Komponenten; und
- erneutes Fügen der Komponenten durch Verschrauben,
wobei eine Fügekraft/Weg-Kennlinie während des Fügens mit der Fügevorrichtung aufgenommen wird, die Kennlinie mit einer Referenzkennlinienschar verglichen wird, und das Vorliegen eines Fremdkörpers an der Trennfläche bei Abweichung der gemessenen Fügekraft/Wegkennlinie von der Referenzkennlinienschar angegeben wird.

2. Verfahren gemäß Anspruch 1, wobei die Fügevorrichtung eine Fügekraft bzw. eine Flächenpressung auf die Fügefläche (14) aufbringt.

3. Verfahren gemäß Anspruch 2, wobei die Fügevorrichtung die Komponenten an der Fügefläche mit einer Fügekraft bzw. Flächenpressung beaufschlagt, welche höher ist als die Fügekraft bzw. Flächenpressung, die durch Verschrauben erreicht werden kann.

4. Verfahren gemäß einem der vorstehenden Ansprüche, wobei nach dem Trennen der Komponenten die Fügefläche, insbesondere die Trennfläche, von Fremdkörpern, insbesondere von Partikeln, Einschlüssen oder anderen Verunreinigungen gesäubert wird, insbesondere durch Rütteln, Bürsten, Fluidbehandlung, Ausblasen, eine manuelle Entfernung oder andere geeignete Schritte.

5. Verfahren gemäß einem der vorstehenden Ansprüche, wobei die Fügekraft bzw. die Flächenpressung während des Fügens in der Fügevorrichtung variiert wird, insbesondere um Setzvorgänge in der Fügefläche zu beschleunigen.

6. Verfahren gemäß Anspruch 1, wobei bei Vorliegen einer Verunreinigung an der Fügefläche nach dem Trennen der Komponenten der Fügevorgang mit der Fügevorrichtung wiederholt wird.

7. Fügesystem zur Durchführung des Verfahrens gemäß einem der vorstehenden Ansprüche, umfassend
eine Fügevorrichtung (2) in der Form einer Fügepresse (22) zum Aufbringen einer Fügekraft bzw. einer Flächenpressung auf die Fügefläche zwischen den beiden Komponenten des Bauteils;
eine Trennvorrichtung zum Trennen der beiden Komponenten; und
eine Schraubvorrichtung zum Verschrauben der beiden Komponenten miteinander.

8. Fügesystem gemäß Anspruch 7, wobei die Fügevorrichtung und die Trennvorrichtung miteinander integriert sind, und insbesondere in Form einer zumindest eine der beiden Komponenten verfahrbaren Vorrichtung, die gleichzeitig eine entsprechende Fügekraft bzw. Flächenpressung auf die Fügefläche aufbringen kann.

## Claims

1. Method for joining two components (10, 12) of a structural member (1) to be screwed together, which components are the cap (10) and shank (12) of a fracture-split connecting rod (1) or the cap and lower part of a universal joint yoke, comprising the steps of:
- first joining the components by means of a joining device (2) in the form of a joining press (22);
- separating the components; and
- re-joining the components by screwing,
wherein a joining force/distance characteristic curve is recorded during joining with the joining device, the characteristic curve is compared with a family of reference characteristic curves, and the presence of a foreign body at the interface is indicated if the measured joining force/distance characteristic curve differs from the family of reference characteristic curves.

2. Method according to claim 1, wherein the joining device applies a joining force or surface pressure to the joining surface (14).

3. Method according to claim 2, wherein the joining device subjects the components at the joining surface to a joining force or surface pressure which is greater than the joining force or surface pressure which can be achieved by screwing.

4. Method according to any of the preceding claims, wherein, after separation of the components, foreign bodies , in particular particles, inclusions or other impurities, are cleaned off the joining surface, in particular the interface, in particular by vibrating, brushing, fluid treatment, blowing out, manual removal or other suitable steps.

5. Method according to any of the preceding claims, wherein the joining force or the surface pressure is varied during joining in the joining device, in particular in order to accelerate bedding processes in the joining surface.

6. Method according to claim 1, wherein if there is an impurity at the joining surface after separation of the components the joining operation with the joining device is repeated.

7. Joining system for carrying out the method according to any of the preceding claims, comprising
a joining device (2) in the form of a joining press (22) for applying a joining force or surface pressure to the joining surface between the two components of the structural member;
a separating device for separating the two components; and
a screwing device for screwing the two components together.

8. Joining system according to claim 7, wherein the joining device and the separating device are integrated with each other, and in particular in the form of a device which can move at least one of the two components and which at the same time can apply a corresponding joining force or surface pressure to the joining surface.

## Revendications

1. Procédé d'assemblage de deux composants {10, 12) à visser ensemble d'une pièce (1), lesdits composants étant le couvercle (10) et la tige (12) d'une bielle à tête fracturée (1), ou le couvercle et l'élément inférieur d'une fourche pour joint de cardan, comprenant les étapes suivantes :
- premier assemblage des composants au moyen d'un dispositif d'assemblage (2) sous la forme d'une presse d'assemblage (22) ;
- séparation des composants ; et
- nouvel assemblage des composants par vissage,
où une courbe caractéristique de force d'assemble/course est enregistrée pendant l'assemblage avec le dispositif d'assemblage, la courbe caractéristique est comparée à un réseau de courbes caractéristiques de référence, et la présence d'un corps étranger à la surface de séparation est indiquée en cas d'écart entre la courbe caractéristique de force d'assemble/course mesurée et le réseau de courbes caractéristiques de référence.

2. Procédé selon la revendication 1, où le dispositif d'assemblage applique une force d'assemblage ou une pression superficielle sur la surface d'assemblage (14).

3. Procédé selon la revendication 2, où le dispositif d'assemblage soumet les composants sur la surface d'assemblage à une force d'assemblage ou à une pression superficielle supérieure à la force d'assemblage ou à la pression superficielle pouvant être obtenue par vissage.

4. Procédé selon l'une des revendications précédentes, où, après séparation des composants, la surface d'assemblage, en particulier la surface de séparation, est débarrassée des corps étrangers, en particulier de particules, d'inclusions ou d'autres impuretés, notamment par agitation, brossage, traitement par fluide, soufflage, retrait manuel ou par d'autres moyens adaptés.

5. Procédé selon l'une des revendications précédentes, où la force d'assemblage ou la pression superficielle est modifiée pendant l'assemblage dans le dispositif d'assemblage, en particulier pour accélérer les processus de fixation sur la surface d'assemblage.

6. Procédé selon la revendication 1, où en cas de présence d'une impureté sur la surface d'assemblage après séparation des composants, le processus d'assemblage est répété par le dispositif d'assemblage.

7. Système d'assemblage pour l'exécution du procédé selon l'une des revendications précédentes, comprenant
un dispositif d'assemblage (2) sous la forme d'une presse d'assemblage (22) destiné à appliquer une force d'assemblage ou une pression superficielle sur la surface d'assemblage entre les deux composants de la pièce ;
un dispositif de séparation destiné à séparer les deux composants ; et
un dispositif de vissage destiné à visser ensemble les deux composants.

8. Système d'assemblage selon la revendication 7, où le dispositif d'assemblage et le dispositif de séparation sont intégrés l'un à l'autre, en particulier sous la forme d'un dispositif déplaçable vers au moins un des deux composants, lequel peut appliquer simultanément une force d'assemblage ou une pression superficielle correspondante sur la surface d'assemblage.
